# FASCICULE DE BREVET EUROPEEN

(11) **EP 1 646 753 B1**
(45) Date de publication et mention de la délivrance du brevet: **22.08.2012**
(21) Numéro de dépôt: 04767512.9
(22) Date de dépôt: 29.06.2004
(51) Int. Cl.: E02B 17/08, B23K 31/02, B23K 37/00, B23K 9/02, B23K 37/02

(54) **PROCEDE D'ASSEMBLAGE D'UN TRONCON DE CREMAILLERE DE PLATE-FORME PETROLIERE AUTO-ELEVATRICE**
VERFAHREN ZUM ZUSAMMENSETZEN EINER ZAHNSTANGE FÜR EINE SICH SELBSTHEBENDE ÖLPLATFORM
METHOD FOR ASSEMBLY OF A SECTION OF RACK ON A SELF-RAISING OIL PLATFORM

(30) Priorité: 02.07.2003 FR 0308057
(43) Date de publication de la demande: 19.04.2006
(73) Titulaire: INDUSTEEL FRANCE, 92800 Puteaux (FR); Civad SA, 71210 Montchanin (FR)
(72) Inventeur: CARDAMONE, David, F-71210 ECUISSES (FR); MABELLY, Philippe, F-71670 LE BREUIL (FR)
(74) Mandataire: Lagrange, Jacques Etienne M.M.
(86) Numéro de dépôt international: PCT/FR2004/001668
(87) Numéro de publication internationale: WO 2005/012649

(56) Documents cités:
- EP-A- 0 645 496
- WO-A-2004/004959
- DE-B- 1 104 641
- FR-A- 2 719 611
- FR-A- 2 719 615
- US-A- 3 967 457
- PATENT ABSTRACTS OF JAPAN vol. 009, no. 319 (M-439), 14 décembre 1985 (1985-12-14) -& JP 60 154875 A (NIPPON KOKAN KK), 14 août 1985 (1985-08-14)

## Description

La présente invention concerne un procédé d'assemblage d'un tronçon de crémaillère de plateforme pétrolière auto-élévatrice, un tronçon de plateforme pétrolière auto-élévatrice susceptible d'être obtenue par le procédé et des dispositifs pour la mise en oeuvre du procédé.

Les plates-formes pétrolières auto-élévatrices sont constituées d'une coque portée par des jambes destinées à prendre appui sur le fond marin. Afin de pouvoir régler la hauteur de la coque par rapport aux pieds des jambes, la coque est montée déplaçable le long dés jambes. Le réglage de la position de la coque par rapport aux pieds des jambes se fait par l'intermédiaire d'un dispositif constitué de roues dentées s'engrenant sur des crémaillères, les crémaillères constituant des membrures des jambes.

Les crémaillères sont constituées de tronçons soudés bout à bout, formés d'une part une plaque rectangulaire, et d'autre part par des raidisseurs en forme de demi-coquille soudées sur les faces principales de la plaque. Chaque plaque rectangulaire comporte sur ses faces latérales, des dents destinées à coopérer avec une roue dentée du dispositif d'entraînement de la coque. Chaque raidisseur, soudé sur une des faces principales des plaques rectangulaires, a une longueur inférieure à la longueur d'une plaque, de façon à permettre le soudage bout à bout de deux tronçons successifs. Pour assurer la continuité des raidisseurs, une pièce de liaison en forme de demi-coquiile est positionnée dans la zone de raccordement de deux tronçons successifs. Les raidisseurs sont fixés sur les faces latérales des plaques rectangulaires par soudage, et la qualité des soudures est un facteur important de la tenue mécanique des crémaillères. En particulier, la qualité de la surface des soudures est un facteur important dé tenue à la fatigue.

Le document FR2719615A décrit un procédé d'assemblage d'un tronçon de crémaillère de plateforme pétrolière auto-élévatrice, du type précité, selon lequel, on soude au moins un raidisseur sur une plateforme rectangulaire munie de dents, par soudage par faisceau d'électrons, depuis l'extérieur des raidisseurs, et on refond le cordon de soudure le long de la jonction entre la plaque rectangulaire et le raidisseur, par l'intérieur du raidisseur. La refusion est réalisée à l'aide d'un dispositif approprié.

Afin d'obtenir des soudures de qualité satisfaisante, on dispose une latte en céramique à l'intérieur des raidisseurs, le long de l'arête longitudinale du raidisseur, à la jonction de la plaque rectangulaire, puis on réalise le soudage le long des arrêtes longitudinales du raidisseur en soudant par l'extérieur par une technique de soudage avec apport de métal. La latte de céramique assure le moulage du cordon de soudure dans la partie interne du raidisseur. Les cordons de soudure ainsi obtenus ont l'avantage d'avoir, notamment dans la partie interne des raidisseurs, des racines de bonne qualité, ayant un bon aspect de surface, et donc une bonne tenue à la fatigue. Cependant, et notamment pour des raisons de fissuration à chaud au cours du soudage, il a été montré qu'il n'est pas possible, avec cette technique, d'obtenir des raccordements de la racine de la soudure dans la zone interne des raidisseurs ayant des rayons de courbure supérieur à trois mm. Il en résulte que la tenue à la fatigue de ces soudures est limitée. En outre la technique de soudage qui consiste à utiliser une latte de céramique rend parfois le contrôle des soudures difficile. En effet, après avoir effectue le soudage sur la latte de céramique, celle-ci doit être enlevée pour que le contrôle de la soudure puisse être effectué. Or l'enlèvement de la latte de céramique n'est pas toujours aisé. En particulier il peut rester des éclats de latte emprisonnés dans le cordon de soudure Ces éclats de latte induisent des défauts dans la soudure qui affectent sa tenue mécanique.

Par ailleurs du fait des défauts de planéités des plaques ou des défauts de géométrie des raidisseurs, le cordon de soudure obtenu n'est pas toujours très régulier. Il en résulte que le contrôle par ultrasons de la qualité des soudures obtenue en finale est difficile.

Enfin, cette technique de soudage avec latte de céramique est coûteuse, d'une part parce qu'elle nécessite l'utilisation de lattes de céramique faites sur mesure qui sont elles-mêmes coûteuses, d'autre part parce que la mise en place de lattes de céramique et l'enlèvement après soudage sont des opérations longues qui sont également coûteuses.

Le but de la présente invention est de remédier à ces inconvénients en proposant une technique de soudage des raidisseurs des crémaillères d'une plate-forme pétrolière auto-élévatrice, permettant d'améliorer la tenue en fatigue des soudures, et qui soit plus facile et plus économique à mettre en oeuvre que les techniques de soudure connues.

A cet effet, l'invention a pour objet un procédé d'assemblage d'un tronçon de crémaillère de plate-forme pétrolière auto-élévatrice, constitué d'au moins une plaque rectangulaire comportant sur ses faces latérales longitudinales des dents, et d'au moins un raidisseur en forme de demi-coquille soudé sur une face principale d'au moins une plaque rectangulaire, le long des arrêtes longitudinales de l'au moins un raidisseur, caractérisé en ce que:
- on réalise sur chacune des arrêtes longitudinales d'au moins un raidisseur un chanfrein intérieur et un chanfrein extérieur séparés par un talon d'épaisseur T,
- on dispose le raidisseur sur la plaque,
- on réalise sur la partie interne de chacune des arrêtes longitudinales du raidisseur au moins une passe de soudage de façon à réaliser des cordons de soudure internes ayant un rayon de raccordement R supérieur ou égal à 4 mm,
- et on remplit les chanfreins sur la partie externe de chacune des arêtes longitudinales du raidisseur par un cordon de soudure extérieur réalisé en au moins une passe avec un apport de métal.

De préférence l'au moins une passe de soudage réalisée sur la partie interne de chacune des arêtes longitudinales du raidisseur est une passe de soudage avec apport de métal.

En outre, après avoir réalisé les cordons de soudure internes et avant de remplir les chanfreins sur la partie externe des arrêtes longitudinales du raidisseur, il est préférable de contrôler les cordons de soudure internes et, si nécessaire, meuler les défauts et réparer les cordons de soudure,

De préférence l'épaisseur T du talon est inférieure à la somme de la profondeur de pénétration du cordon de soudure intérieur, de la profondeur de pénétration de la première passe du cordon de soudure extérieur et de l'épaisseur de meulage éventuel d'un défaut.

Le cordon de soudure interne peut, par exemple, être réalisé par un procédé pris parmi les procédés : à arc submergé, MIG, MAG, TIG et à électrode enrobée. Le cordon de soudure extérieur peut être réalisé par le procédé à arc submergé.

Le raidisseur peut être une pièce de raccordement entre deux raidisseurs de deux plaques rectangulaires adjacentes.

L'invention concerne également un tronçon de crémaillère de plateforme pétrolière autoélévatrice susceptible d'être obtenu par le procédé d'assemblage selon l'invention, le tronçon étant constitué d'au moins une plaque rectangulaire comportant sur ses faces latérales longitudinales des dents, et d'au moins un raidisseur en forme de demi-coquille soudé sur une face principale de l'au moins une plaque rectangulaire, le long des arrêtes longitudinales d'au moins un raidisseur, la soudure de liaison entre l'au moins un raidisseur et l'au moins une plaque rectangulaire étant constituée d'au moins un cordon de soudure interne et au moins un cordon de soudure externe dont le rayon de courbure de raccordement du cordon de soudure interne d'un raidisseur sur la plaque rectangulaire est supérieur ou égal à 4 faim.

De préférence, au moins une soudure de liaison entre un raidisseur et une plaque rectangulaire est constituée d'au moins un cordon de soudure interne et au moins un cordon de soudure externe.

L'invention concerne enfin un dispositif pour mettre en oeuvre le procédé selon l'invention qui comporte une tête de soudage constituée d'une buse et d'un guide chanfrein, portée par l'extrémité d'un bras monté articulé sur un chariot mobile sur des rails, et qui comporte également des moyens pour approvisionner la tête de soudage en métal d'apport, en flux de soudage et en énergie.

Le dispositif pour mettre en oeuvre !e procédé selon l'invention peut également comporter un chariot suspendu à des câbles portant au moins une tête de soudage et des moyens de guidage, et comporter des moyens pour approvisionner au moins une torche de soudage en métal d'apport, en flux de soudage et en énergie.

L'invention va maintenant être décrite de façon plus précise mais non limitative au regard des figures annexées dans lesquelles :
- la figure 1 représente schématiquement un tronçon de jambe de plate-forme auto-élévatrice
- la figure 2 est une vue en perspective d'un élément de crémaillère de plate-forme pétrolière auto-élévatrice.
- la figure 3 est une vue en coupe de la zone de raccordement d'un raidisseur et d'une plaque d'une crémaillère d'une plate-forme pétrolière, avant soudage.
- la figure 4 est une vue en coupe de la zone de raccordement d'un raidisseur et d'une plaque d'une crémaillère d'une plate-forme pétrolière, après soudage.
- la figure 5 est une représentation schématique d'un dispositif utilisé pour le soudage des renforts sur des plaques des crémaillères de plate-forme pétrolières.
- la figure 6 est une vue schématique d'un dispositif pour soudage des pièces de raccordement entre deux tronçons de deux crémaillères.

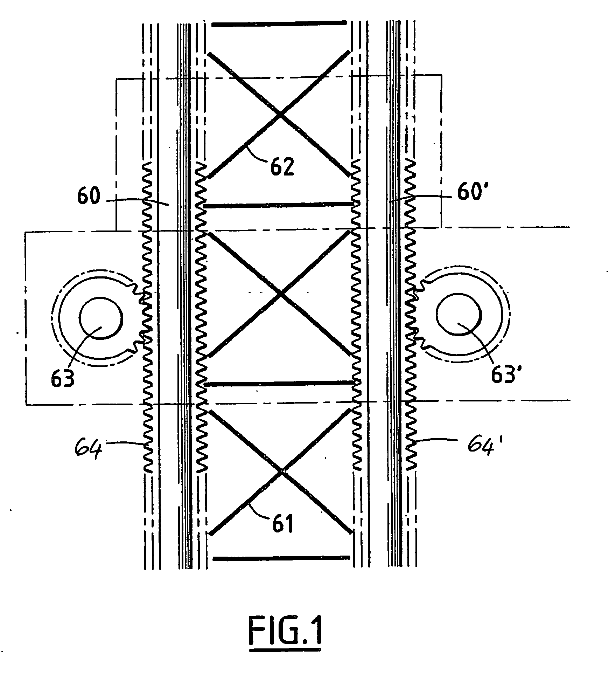

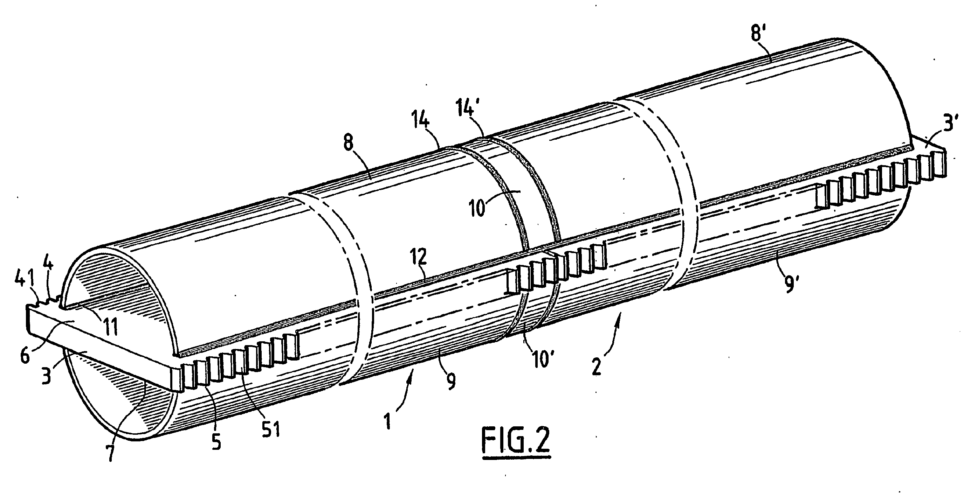

Comme cela est représenté de façon schématique à la figure 1, une jambe de plate-forme autoélévatrice comporte des membrures verticales 60, 60' constituées de crémaillères, reliées entre elles par un treillis 62. Les crémaillères comportent des dents 64, 64' sur lesquelles s'engrènent des roues dentées 63, 63', appartenant au dispositif de réglage en hauteur de la coque de la plate-forme. Les crémaillères sont constituées d'une pluralité de tronçons assemblés bout à bout. Comme cela est représenté à la figure 2, deux tronçons adjacents 1 et 2 sont disposés dans le prolongement l'un de l'autre et assemblés par soudage. Les deux tronçons étant identiques, dans la suite on ne décrira que le tronçon 1.

Le tronçon 1 est constitué d'une plaque rectangulaire 3 épaisse dont les faces latérales 4 et 5 sont munies de dents 41, 51 sur lesquelles peuvent venir s'engrener des roues dentées. Sur les faces principales supérieure 6 et inférieure 7 de la plaque rectangulaire 3 sont disposés des raidisseurs 8 et 9 en forme de demi-coquille dont les longueurs sont inférieures à la longueur de la plaque rectangulaire 3. Les raidisseurs en forme de demi-coquille 8 et 9 sont soudés à la plaque rectangulaire 3 le long de leurs arrêtes longitudinales 11 et 12 (sur la figure seules les arrêtes longitudinales du raidisseur supérieur 8 sont visibles). Les raidisseurs en forme de demi-coquille 8 et 9 du premier tronçon 1 et les raidisseurs 8' et 9' du deuxième tronçon 2 étant plus courts que les plaques rectangulaires 3 et 3' constituant les premier et deuxième tronçons, ces raidisseurs laissent entre eux un espace rempli par une pièce de raccordement supérieure 10 également en forme de demi-coquille et une pièce de raccordement inférieure 10' identique. Ces pièces de raccordement 10 et 10' sont également des raidisseurs.

Les pièces de raccordement 10 et 10' sont soudées sur les plaques rectangulaires 3 et 3' le long des arrêtes qui sont en contact avec la plaque rectangulaire. Elles sont également soudées aux raidisseurs 8, 8' et 9, 9' avec lesquels elles coopèrent, par exemple le long des arrêtes 14 et 14' pour la pièce de raccordement supérieure 10.

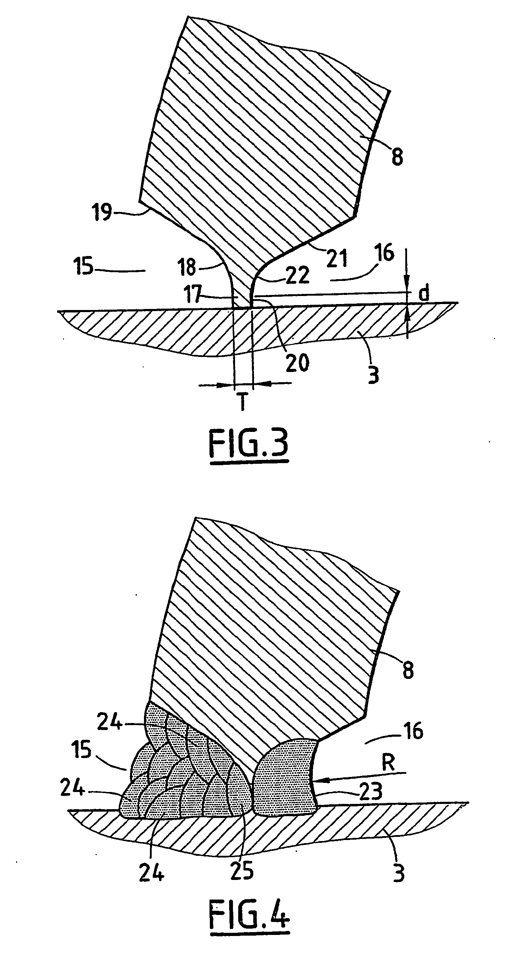

Pour réaliser le soudage d'un raidisseur, par exemple le raidisseur repéré 8 de la figure 1, sur la plaque rectangulaire 3, le long des arrêtes longitudinales 11 ou 12, on commence par usiner les arrêtes 11 et 12 du raidisseur en forme de demi-coquille 8 de façon à créer sur chacune des arrêtes un chanfrein extérieur 15 et un chanfrein intérieur 16, séparés par un talon 17 comme cela est représenté à la figure 3. Le talon 17 est destiné à venir en appui sur la plaque rectangulaire 3 et les chanfreins 15 et 16 qui créent des saignées entre la plaque rectangulaire 3 et le raidisseur 8 sont destinés à recevoir des cordons de soudure.

Le chanfrein extérieur 15 a une forme connue de l'homme du métier et comporte un profil concave de façon à former une face latérale inclinée 19 et un fond de chanfrein 18. Le chanfrein intérieur 16 a soit une forme plate c'est-à-dire qu'il comporte essentiellement une paroi inclinée 21, soit une forme concave c'est-à-dire qu'il comporte non seulement une paroi inclinée 21, mais également un fond de chanfrein 20. Dans ce dernier cas, le fond de chanfrein et la paroi 21 sont raccordés par l'intermédiaire d'un rayon de raccordement 22.

La matière comprise entre le fond de chanfrein 18 du chanfrein extérieur 15 et le fond de chanfrein 20 du chanfrein intérieur 16, constitue le talon 17. Le talon 17 a une largeur T et une hauteur d qui correspond à la largeur du fond de chanfrein 20.

Après avoir réalisé les chanfreins sur les deux arrêtes longitudinales du raidisseur supérieur 8 et du raidisseur inférieur 9, on constitue un pré-assemblage. Pour réaliser ce pré-assemblage, on positionne les deux raidisseurs supérieur 8 et inférieur 9 sur les faces 6 et 7 de la plaque rectangulaire 3. Puis, on réalise des points de soudure pour assurer la rigidité du pré-assemblage.

Une fois le pré-assemblage réalisé, on réalise dans le fond de chanfrein intérieur de chacun des raidisseurs au moins une passe de soudage, dite passe de racine, destinée à former un cordon de soudure de racine 23. Ces passes de soudage de racine sont réalisées par un procédé avec apport de métal de soudage tel que, par exemple, un procédé à arc submergé ou un procédé MIG, ou un procédé MAG, ou un procédé TIG, ou encore un procédé de soudage à l'électrode enrobée. Ce soudage est effectué de telle sorte qu'il y ait une certaine pénétration du cordon de soudure 23 à l'intérieur du talon 17 situé au fond du chanfrein 16. Le nombre de passes de soudage qui est effectué, est choisi en fonction de la géométrie que l'on souhaite obtenir pour le cordon de soudure de racine. Cette géométrie est caractérisée essentiellement par le rayon de raccordement R du cordon de soudure. De façon connue de l'homme du métier, le rayon de raccordement du cordon de soudure est le rayon de courbure de la surface interne du cordon de soudure, orientée vers l'intérieur du raidisseur. Lorsque le soudage est effectué en une seule passe, le rayon de raccordement R est supérieur ou égal à 4 mm, mais voisin de 4 mm. Si le soudage est effectué en plusieurs passes le rayon de raccordement R peut être très supérieur à 4 mm.

La longueur moyenne des soudures à réaliser étant d'environ 12 m, compte tenu de la taille habituelle des tronçons de crémaillère destinés à être montés sur des plates-forme de forage pétrolier, l'opération de soudage est effectuée en générale en deux temps avec une intersection des cordons de soudure au centre du tronçon. C'est-à-dire que l'on soude d'abord une première moitié du tronçon en commençant par une extrémité puis on soude la deuxième moitié du tronçon en commençant par la deuxième extrémité.

Après avoir réalisé les cordons de soudure intérieurs d'un raidisseur, on nettoie les cordons de soudure à l'intérieur du raidisseur pour enlever le flux de soudure qui peut être resté accroché lors du soudage. On effectue alors un contrôle de la régularité des cordons de soudure de racine côté intérieur. Ce contrôle est effectué par exemple par caméra. Lorsque des défauts son détectés, ces défauts sont repérés puis meulés depuis l'extérieur des raidisseurs de façon à enlever le métal dans les zones correspondantes. Une fois ce métal est enlevé, on répare le cordon de soudure par le même procédé que pour réaliser la passe de racine côté intérieur, c'est-à-dire qu'on soude par l'intérieur. Lorsqu'on a fini de contrôler et de réparer le cordon de soudure intérieur, et donc qu'on a des cordons de soudure intérieur sains, on procède au remplissage final des chanfreins extérieurs par un procédé de soudage avec apport de métal, tel que le procédé de soudage par arc submergé. On procède alors au contrôle magnétoscopique et ultrasonique de tous les joins soudés.

En procédant ainsi, on obtient une liaison entre le raidisseur 8 et la plaque rectangulaire 3 telle qu'elle est représentée à la figure 4. Cette zone de liaison comporte du côté intérieur, un cordon de soudure interne 23 réalisé en une ou plusieurs passes et ayant un rayon de raccordement R supérieur ou égal à 4 mm, et côté extérieur un cordon de soudure constitué d'une pluralité de cordons de soudure élémentaires 24, 25 réalisés par un procédé de type à arc submergé. Pour que le soudage soit de bonne qualité, il est nécessaire que le cordon de soudure interne 23 et le premier cordon de soudure élémentaire 25 situé au fond du chanfrein externe 15 ne laissent pas d'espace disponible. Cela suppose qu'il y ait une certaine interpénétration du cordon de soudure interne 23 et du premier cordon de soudure élémentaire externe 25. Pour cela, l'épaisseur du talon T, doit être inférieure à la somme de la profondeur de pénétration du cordon côté intérieur et de la profondeur de pénétration de la première passe élémentaire côté extérieur, moins l'épaisseur de métal éventuellement ôtée par meulage avant de réaliser la première passe côté extérieur. Les profondeurs de pénétration des côtés intérieur et extérieur, dépendent des procédés de soudage utilisés, de leurs paramètres énergétiques, ainsi que de la géométrie des gorges dans lesquelles les cordons sont déposés. L'homme du métier sait déterminer ces profondeurs de pénétration des cordons de soudure.

D'une façon générale, le métal d'apport peut être choisi en fonction des objectifs que l'on se fixe pour les propriétés de la soudure.

Le métal d'apport peut avoir la même composition que le métal dont sont constitués les renforts et la plaque rectangulaire. Dans ce cas, on obtient pour la soudure des propriétés équivalentes aux propriétés des raidisseurs et de la plaque rectangulaire.

Le métal d'apport peut, également, être un peu moins allié que le métal dont sont constitués les raidisseurs et la plaque rectangulaire. Dans ce cas les risques de fissuration de soudure sont atténués.

Enfin si l'on souhaite créer des contraintes résiduelles de compression dans les cordons de soudure afin d'améliorer la résistance à la fatigue, on peut utiliser un métal d'apport plus allié que le métal dont sont constitués les raidisseurs et la plaque rectangulaire.

L'homme du métier sait choisir ces produits d'apport en fonction des circonstances particulières, donc des objectifs particuliers qu'il poursuit.

Le soudage des raidisseurs sur la plaque rectangulaire se fait en général en atelier, le tronçon des crémaillères étant disposé à l'horizontal. Les tronçons ainsi obtenus sont ensuite assemblés sur chantier, en position verticale, lors de la construction des jambes des plates-formes.

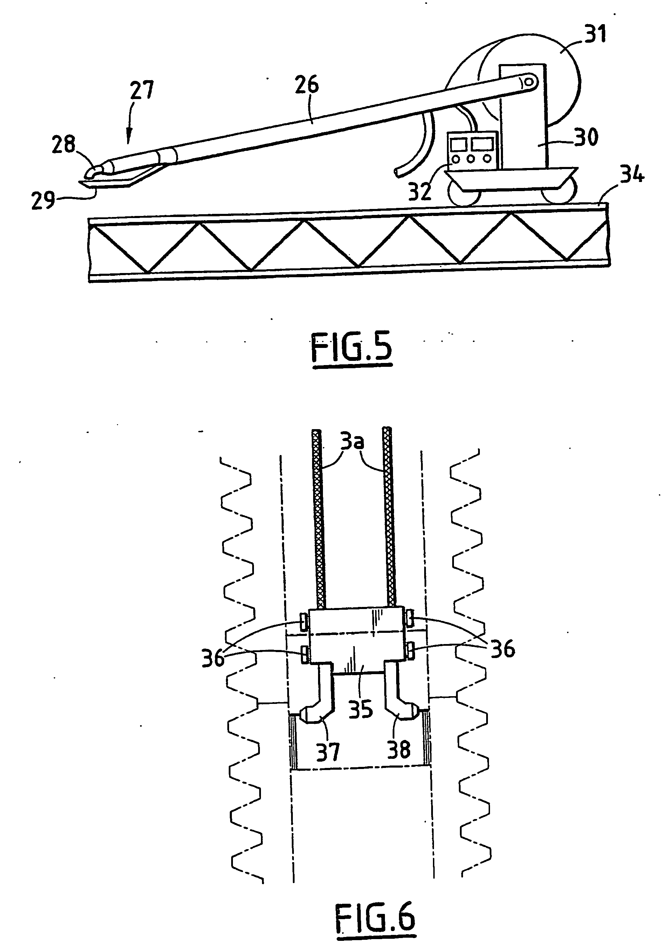

Pour effectuer ce soudage on utilise un outillage spécifique représenté à la figure 5. Cet outillage est constitué d'un bras 26 de longueur relativement importante, en général supérieure à 7 m, qui porte à une de ses extrémités une tête de soudage repérée généralement par 27. La tête de soudage 27 comporte d'une part une buse de soudage 28 et d'autre part un guide chanfrein 29 destiné à s'appuyer sur le chanfrein dans lequel on veut réaliser un cordon de soudure. Le bras 26 est monté articulé, par sa deuxième extrémité, sur un chariot 30 mobile sur des rails 34. Le chariot 30 est motorisé ou non. Le chariot porte également un boîtier de commande et des systèmes de régulation des paramètres de soudage 32, ainsi qu'une bobine de fil 31 qui servira à alimenter en fil de soudage la tête de soudage. Le boîtier de commande et le système de régulation des paramètres de soudage sont reliés à un générateur de puissance, non représenté, situé en dehors du chariot 30. Le bras 26, qui est de longueur modulable de façon à pouvoir s'adapter à la longueur du chanfrein sur lequel on veut réaliser la soudure, dispose de moyens pour convoyer d'une part le flux de soudage d'autre part le fil de métal d'apport. Le flux de soudage est convoyé par l'intermédiaire d'une gaine sous pression reliée à un dispositif d'alimentation en flux de soudage, connu en lui-même, se trouvant à proximité du chariot motorisé. Le fil de métal d'apport est convoyé le long du bras 26 par l'intermédiaire d'un système dit "push-pull", connu en lui-même, constitué, en général, de galets pousseurs et de galets tireurs, motorisés. Les galets pousseurs sont dispersés à proximité de la bobine de fil de métal d'apport 31 et les galets tireurs sont disposés à proximité de la tête de soudage 27.

En général, le dispositif d'alimentation en flux de soudage comporte une étuve située également à proximité du chariot.

Les pièces de raccordement 10, 10' qui assurent le raccordement entre les raidisseurs des deux tronçons adjacents de crémaillère, sont soudées d'une part aux raidisseurs 8 et 8' ou 9 et 9' entre lesquels elles sont insérées, le long des lignes de raccordement 14 et 14', et d'autre part sur les plaques rectangulaires par le même procédé que les raidisseurs 8 et 9. En procédant ainsi, les soudures des pièces de raccordement comportent des cordons de soudure internes ayant un rayon de raccordement supérieur à 4 mm. Cependant, les pièces de raccordement 10 et 10' ne sont pas montées lorsque les tronçons de crémaillère sont en atelier, mais elles sont montées sur le chantier de montage de la plate-forme pétrolière. Lors de ce montage de la plate-forme pétrolière, les éléments des crémaillères ne sont plus horizontaux mais verticaux. Pour réaliser les soudures des pièces de raccordement, telle que la pièce 10, il est alors nécessaire de pouvoir faire pénétrer une tête de soudage à l'intérieur des raidisseurs, ou plus exactement dans l'espace disponible entre les raidisseurs et la plaque rectangulaire, et de faire descendre ce moyen de soudage verticalement jusqu'à la zone dans laquelle la soudure doit être réalisée. Pour faire descendre les têtes de soudage à l'intérieur des raidisseurs, on utilise un dispositif représenté à la figure 6. Ce dispositif comporte un chariot 35 muni de moyens de guidage 36, qui sont par exemple des roulettes, et qui porte deux torches de soudage 37 et 38, orientées de façon à pouvoir souder le long des deux arrêtes longitudinales intérieures 11 et 12. Le chariot mobile est suspendu à deux câbles 39 qui permettent de le faire monter ou descendre à l'intérieur des raidisseurs.

En outre, le chariot mobile est relié par des moyens non représentés, d'une part à une source d'énergie, d'autre part à un moyen pour fournir du métal d'apport, par exemple une bobine de fil de métal d'apport, et enfin à des moyens pour apporter du flux de soudage qui peut être soit du flux solide, soit du flux gazeux. Ces moyens sont connus en eux-mêmes.

Le procédé tel qu'il vient d'être décrit est un procédé dans lequel la passe de racine est réalisée par une technique de soudage avec métal d'apport. Mais il est également possible de réaliser cette passe de racine par une technique de soudage sans métal d'apport. En procédant ainsi, on obtient également des résultats satisfaisants.

D'une façon générale, le procédé qui vient d'être décrit présente l'avantage d'obtenir une racine qui, dans tous les cas, a une géométrie plus satisfaisante que la géométrie des racines obtenues par la technique utilisant une latte de céramique, en particulier parce que le rayon minimum de raccordement du cordon de soudage côté intérieur est supérieur ou égal à 4 mm. En outre, lorsque la passe de racine est réalisée par une technique avec métal d'apport, il est possible, en choisissant convenablement le métal d'apport, d'ajuster les propriétés mécaniques de la racine. En particulier on peut réaliser des racines dont les caractéristiques mécaniques sont augmentées par rapport à celles que l'on aurait naturellement. Par ailleurs, le procédé de soudage par reprise côté intérieur, tel qu'il vient d'être décrit, ne nécessite pas de nettoyage difficile des soudures à l'intérieur des renforts comme c'est le cas avec la technique de soudage avec les lattes de céramique. De ce fait la productivité du procédé de soudages est considérablement améliorée. Enfin, le cordon de soudage n'étant pas pollué par des débris comme c'est le cas dans du soudage avec des lattes de céramique, le procédé est beaucoup plus régulier et donc beaucoup plus répétitif et plus facile à contrôler. Il en résulte que les soudures obtenues ont une meilleure fiabilité que les soudures obtenues par les procédés connus.

## Revendications

1. Procédé d'assemblage d'un tronçon (1, 2) de crémaillère de plateforme pétrolière auto-élévatrice, constitué d'au moins une plaque rectangulaire (3, 3') comportant sur ses faces latérales longitudinales (4, 5) des dents (41, 51), et au moins un raidisseur (8, 8', 9, 9', 10, 10') en forme de demi-coquille soudé sur une face principale (6, 7) de l'au moins une plaque rectangulaire (3, 3'), le long des arrêtes longitudinales (11, 12) de l'au moins un raidisseur (8, 8', 9, 9', 10, 10'), **caractérisé en ce que** :
- on réalise sur chacune des arrêtes longitudinales (11, 12) de l'au moins un raidisseur (8, 8', **9,** 9', 10, 10'), un chanfrein intérieur (16) et un chanfrein extérieur (15) séparés par un talon (17) d'épaisseur T,
- on dispose l'au moins un raidisseur (8, 8', 9, 9', 10, 10') sur une face principale (6, 7) de la plaque rectangulaire (3)
- on réalise sur la partie interne de chacune des arrêtes longitudinales (11, 12) de l'au moins un raidisseur (8, 8', 9, 9', 10, 10') au moins une passe de soudage de façon à réaliser un cordon de soudure interne (23) ayant un rayon de raccordement R supérieur ou égal à 4 mm,
- et on remplit les chanfreins sur la partie externe de chacune des arêtes longitudinales (11, 12) de l'au moins un raidisseur (8, 8'. 9, 9', 10, 10') par un cordon de soudure extérieur réalisé en au moins une passe avec apport de métal.

2. Procédé selon la revendication 1, **caractérisé en ce que** l'au moins une passe de soudage (23) réalisée sur la partie interne de chacune des arêtes longitudinales (11, 12) de l'au moins un raidisseur (8, 8', 9, 9', 10, 10') est une passe de soudage avec apport de métal.

3. Procédé selon la revendication 1 ou 2, **caractérisé en ce que**, en outre, après avoir réalisé le cordon de soudure interne (23) et avant de remplir le chanfrein (15) sur la partie externe des arrêtes longitudinales (11, 12) de l'au moins un raidisseur (8, 8', 9, 9', 10, 10'), on contrôle le cordon de soudure interne (23) et, si nécessaire, on meule les défauts et on répare le cordon de soudure interne (23).

4. Procédé selon l'une quelconque des revendications 1 à 3, **caractérisé en ce que** l'épaisseur T du talon (17) est inférieure à la somme de la profondeur de pénétration du cordon de soudure interne (23), de la profondeur de pénétration de la première passe du cordon de soudure extérieur et de l'épaisseur de meulage éventuel d'un défaut.

5. Procédé de soudage selon l'une quelconque des revendications 1 à 4, **caractérisé en ce que** le cordon de soudure interne (23) est réalisé par un procédé pris parmi les procédés : à arc submergé, MIG, MAG, TIG et à électrode enrobée.

6. Procédé selon l'une quelconque des revendications 1 à 5, **caractérisé en ce que** le cordon de soudure extérieur est réalisé par le procédé à arc submergé.

7. Procédé selon l'une quelconque des revendications 1 à 6, **caractérisé en ce que** l'au moins un raidisseur (10, 10') est une pièce de raccordement entre deux raidisseurs (8, 8', 9, 9') de deux plaques rectangulaires (3, 3') adjacentes.

8. Tronçon de crémaillère de plate-forme pétrolière autoélévatrice susceptible d'être obtenue par le procédé d'assemblage décrit dans la revendication 1, le tronçon étant constitué d'au moins une plaque rectangulaire (3, 3') comportant sur ses faces latérales longitudinales (4, 5) des dents (41, 51), et d'au moins un raidisseur en forme de demi-coquille (8, 8', 9, 9', 10, 10') soudé sur une face principale (6, 7) de l'au moins une plaque rectangulaire (3) le long des arrêtes longitudinales (11, 12) de l'au moins un raidisseur (8, 8', 9. 9', 10. 10'), la soudure de liaison entre l'au moins un raidisseur (8, 8', 9, 9', 10, 10') et l'au moins une plaque rectangulaire (3) étant constituée d'au moins un cordon de soudure interne et au moins un cordon de soudure externe **caractérisé en ce que** le rayon de courbure de raccordement du cordon de soudure interne (23) est supérieur ou égal à 4 mm.

9. Dispositif pour mettre en oeuvre le procédé selon l'une quelconque des revendications 1 à 6, comportant une tête de soudage (27), ledit dispositif étant **caractérisé en ce qu'**il est constitué d'une buse (28) et d'un guide chanfrein (29), ladite tête étant portée par l'extrémité d'un bras (26) monté articulé sur un chariot (30) mobile sur des rails (34), et **en ce qu'**il comporte des moyens pour approvisionner la tête de soudage en métal d'apport, en flux de soudage et en énergie.

10. Dispositif pour mettre en oeuvre le procédé selon la revendication 7, **caractérisé en ce qu'**il comporte un chariot (35) portant au moins une tête de soudage (37, 38) et des moyens de guidage (36), ledit chariot étant suspendu à des câbles (29), et **en ce qu'**il comporte des moyens pour approvisionner ladite au moins une tête de soudage (37, 38) en métal d'apport, en flux de soudage et en énergie.

## Claims

1. Method for assembling a rack portion (1, 2) of a self-raising oil rig, which rack portion (1, 2) is constituted by at least one rectangular plate (3, 3') which comprises teeth (41, 51) at the longitudinal lateral faces (4, 5) thereof and at least one reinforcement (8, 8', 9, 9', 10, 10') in the form of a half-shell which is welded to a main face (6, 7) of the at least one rectangular plate (3, 3'), along the longitudinal edges (11, 12) of the at least one reinforcement (8, 8', 9, 9', 10, 10'), **characterized in that**:
- an internal chamfer (16) and an external chamfer (15) which are separated by a projection (17) having thickness T are produced at each of the longitudinal edges (11, 12) of the at least one reinforcement (8, 8', 9, 9', 10, 10'),
- the at least one reinforcement (8, 8', 9, 9', 10, 10') is/are provided on a main face (6, 7) of the rectangular plate (3),
- at least one welding pass is carried out at the internal portion of each of the longitudinal edges (11, 12) of the at least one reinforcement (8, 8', 9, 9', 10, 10') in order to produce an internal weld bead (23) having a connection radius R which is greater than or equal to 4 mm,
- and the chamfers are filled at the external portion of each of the longitudinal edges (11, 12) of the at least one reinforcement (8, 8', 9, 9', 10, 10') by an external weld bead which is produced in at least one pass with addition of metal.

2. Method according to claim 1, **characterized in that** the at least one welding pass (23) which is carried out at the internal portion of each of the longitudinal edges (11, 12) of the at least one reinforcement (8, 8', 9, 9', 10, 10') is a welding pass with addition of metal.

3. Method according to claim 1 or 2, **characterized in that**, after the internal weld bead (23) is produced and before the chamfer (15) is filled at the external portion of the longitudinal edges (11, 12) of the at least one reinforcement (8, 8', 9, 9', 10, 10'), the internal weld bead (23) is further controlled and, if necessary, the faults are ground and the internal weld bead (23) is repaired.

4. Method according to any one of claims 1 to 3, **characterized in that** the thickness T of the projection (17) is less than the sum of the penetration depth of the internal weld bead (23), the penetration depth of the first pass of the external weld bead and the thickness of any grinding of a fault.

5. Welding method according to any one of claims 1 to 4, **characterized in that** the internal weld bead (23) is produced by a method selected from the submerged arc, MIG, MAG, TIG and coated electrode methods.

6. Method according to any one of claims 1 to 5, **characterized in that** the external weld bead is produced by the submerged arc method.

7. Method according to any one of claims 1 to 6, **characterized in that** the at least one reinforcement (10, 10') is a connection piece between two reinforcements (8, 8', 9, 9') of two adjacent rectangular plates (3, 3').

8. Rack portion of a self-raising oil rig, which rack portion is constituted by at least one rectangular plate (3, 3') which comprises teeth (41, 51) at the longitudinal lateral faces (4, 5) thereof and at least one reinforcement (8, 8', 9, 9', 10, 10') which is in the form of a half-shell and which is welded to a main face (6, 7) of the at least one rectangular plate (3), along the longitudinal edges (11, 12) of the at least one reinforcement (8, 8', 9, 9', 10, 10'), **characterized in that** the radius of curvature for connection of the internal weld bead (23) is greater than or equal to 4 mm.

9. Device for carrying out the method according to any one of claims 1 to 6, comprising a welding head (27) which is constituted by a nozzle (28) and a chamfer guide (29), **characterized in that** the head is carried by the end of an arm (26) mounted so as to be articulated to a movable carriage (30), and **in that** it comprises means for providing the welding head with filler metal, welding flux and electrical power.

10. Device for carrying out the method according to claim 7, **characterized in that** it comprises a carriage (22) which carries at least one welding head (37, 38) and guiding means (36), the carriage being suspended on cables (29), and **in that** it comprises means for providing the at least one welding head (37, 38) with filler metal, welding flux and electrical power.

## Patentansprüche

1. Verfahren zum Zusammenbauen eines Zahnstangenabschnitts (1, 2) einer selbsthebenden Ölplattform, aufweisend zumindest eine rechteckige Platte (3, 3'), die an ihren seitlichen Längsflächen (4, 5) Zähne (41, 51) aufweist, und zumindest eine in Form einer Halbschale ausgebildete Verstärkung (8, 8', 9, 9', 10, 10'), die entlang von Längskanten (11, 12) der zumindest einen Verstärkung (8, 8', 9, 9', 10, 10') an eine Hauptfläche (6, 7) der zumindest einen rechteckigen Platte (3, 3') geschweißt ist, **dadurch gekennzeichnet, dass**
- an jeder der Längskanten (11, 12) der zumindest einen Verstärkung (8, 8', 9, 9', 10, 10') eine innere Phase (16) und eine äußere Phase (15), die durch einen Absatz (17) mit der Dicke T getrennt sind, ausgebildet wird,
- die zumindest eine Verstärkung (8, 8', 9, 9', 10, 10') an einer Hauptfläche (6, 7) der rechteckigen Platte (3) angeordnet wird,
- an dem inneren Abschnitt von jeder Längskante (11, 12) der zumindest einen Verstärkung (8, 8, 9, 9', 10, 10') zumindest eine Schweißlage ausgebildet wird, um eine innere Schweißraupe (23) auszubilden, die einen Verbindungsradius R von größer oder gleich 4mm hat,
- die Phasen an dem äußeren Abschnitt von jeder Längskante (11, 12) der zumindest einen Verstärkung (8, 8', 9, 9', 10, 10') mit einer äu-βeren Schweißraupe befüllt werden, die mit zumindest einer Schweißlage mit Zusatz von Metall ausgebildet wird.

2. Verfahren gemäß Anspruch 1, **dadurch gekennzeichnet, dass** die zumindest eine Schweißlage (23), die an dem inneren Abschnitt von jeder Längskante (11, 12) der zumindest einen Verstärkung (8, 8', 9, 9', 10, 10') ausgebildet wird, eine Schweißlage mit Zusatz von Metall ist.

3. Verfahren gemäß Anspruch 1 oder 2, **dadurch gekennzeichnet, dass**, nach der Ausbildung der inneren Schweißraupe (23) und vor dem Befüllen der Phase (15) an dem äußeren Abschnitt der Längskanten (11, 12) der zumindest einen Verstärkung (8, 8', 9, 9', 10, 10'), weiterhin die innere Schweißraupe (23) weiter gesteuert wird und, falls notwendig, die Fehler geschliffen werden und die innere Schweißraupe (23) repariert wird.

4. Verfahren gemäß einem der Ansprüche 1 bis 3, **dadurch gekennzeichnet, dass** die Dicke T des Absatzes (17) kleiner ist als die Summe aus der Penetrationstiefe der inneren Schweißraupe (23), der Penetrationstiefe der ersten Schweißlage der äußeren Schweißraupe und der Dicke des eventuellen Schleifens des Fehlers.

5. Verfahren gemäß einem der Ansprüche 1 bis 4, **dadurch gekennzeichnet, dass** die innere Schweißraupe (23) durch eines aus den folgenden Verfahren ausgebildet wird: Unterpulverschweißen, MIG-Schweißen, MAG-Schweißen, TIG-Schweißen und Verfahren mit umhüllten Elektroden.

6. Verfahren gemäß einem der Ansprüche 1 bis 5, **dadurch gekennzeichnet, dass** die äußere Schweißraupe durch Unterpulverschwei-βen verwirklicht wird.

7. Verfahren gemäß einem der Ansprüche 1 bis 6, **dadurch gekennzeichnet, dass** die zumindest eine Verstärkung (10, 10') ein Verbindungsstück zwischen zwei Verstärkungen (8, 8', 9, 9') von zwei angrenzenden rechteckigen Platten (3, 3') ist.

8. Zahnstangenabschnitt für eine selbsthebende Ölplattform, der eingerichtet ist, durch das Verfahren zum Zusammenbauen eines Zahnstangenabschnitts gemäß Anspruch 1 erhalten zu werden, wobei der Abschnitt aufweist zumindest eine rechteckige Platte (3, 3'), die an ihren seitlichen Längsflächen (4, 5) Zähne (41, 51) aufweist, und zumindest eine in Form einer Halbschale (8, 8', 9, 9', 10, 10') ausgebildete Verstärkung, die an eine Hauptfläche (6, 7) der zumindest einen rechteckigen Platte (3) entlang von Längskanten (11, 12) der zumindest einen Verstärkung (8, 8', 9, 9', 10, 10') geschweißt ist, wobei die Schweißverbindung zwischen der zumindest einen Verstärkung (8, 8', 9, 9', 10, 10') und der zumindest einen rechteckigen Platte (3) durch zumindest eine innere Schweißraupe und zumindest eine äußere Schweißraupe ausgebildet wird, **dadurch gekennzeichnet, dass** der Biegeverbindungsradius der inneren Schweißnaht (23) größer oder gleich 4 mm ist.

9. Vorrichtung zur Durchführung des Verfahrens gemäß einem der Ansprüche 1 bis 6, aufweisend einen Schweißkopf (27) mit eine Düse (28) und eine Phasenführung (29), **dadurch gekennzeichnet, dass** der Kopf durch das Ende eines Arms (26) gehalten wird, der gelenkig an einem auf Schienen (34) bewegbaren Schlitten (30) angebracht ist, und dass die Vorrichtung aufweist Mittel zum Versorgen des Schweißkopfs mit Metallzusatz, Schweißmittel und mit Energie.

10. Vorrichtung zur Ausführung des Verfahrens gemäß Anspruch 7, **dadurch gekennzeichnet, dass** die Vorrichtung aufweist einen Schlitten (35), der zumindest einen Schweißkopf (37, 38) und Führungsmittel (36) hält, wobei der Schlitten an Kabeln (29) aufgehängt ist, und dass die Vorrichtung aufweist Mittel zum Versorgen des zumindest einen Schweißkopfes (37, 38) mit Metallzusatz, Schweißmittel und Energie.
